# EUROPEAN PATENT APPLICATION

(11) **EP 3 633 998 A1**
(43) Date of publication of application: **08.04.2020**
(21) Application number: 18806645.0
(22) Date of filing: 28.04.2018
(51) Int. Cl.: H04N 21/234, H04N 21/6587, H04N 5/232

(54) **METHOD AND DEVICE FOR OUTPUTTING AND EXAMINING VIDEO FRAME**

(30) Priority: 25.05.2017 CN 201710381050
(71) Applicant: ZTE Corporation, Shenzhen, Guangdong 518057 (CN)
(72) Inventor: MIAO, Jun, Shenzhen, Guangdong 518057 (CN)
(74) Representative: Petraz, Gilberto Luigi
(86) International application number: PCT/CN2018/085134
(87) International publication number: WO 2018/214707

(57) **Abstract**

A method for outputting a video frame is disclosed, and the method includes: acquiring video images from multiple view angles; fusing and stitching, according to view angle information provided by a user terminal, video images of corresponding view angles to form a local video frame matching the view angle information; and providing the local video frame to the user terminal.

## Description

### Field of the Invention

The present disclosure relates to, but is not limited to, the technical field of videos, and in particular, to a method and a device for outputting and examining a video frame.

### Background of the Invention

In the field of video communication or video monitoring, the videos acquired by a camera all have a certain range of view angles. The local or remote user can check the change of the view angle by adjusting the rotation of the cloud deck connected with the camera. If the video acquired by a certain camera is watched by multiple remote users, then the angle of the cloud deck can only meet the requirements of a certain user, and the requirements on different angles of watching videos at the same time for different users cannot be met. To this end, panoramic camera technology came into being. The panoramic camera technology uses multiple cameras and their cloud deck to cooperate to simultaneously acquire video frames of different angles, and then stitches the video frames of different angles into a panoramic image. At this time, if different users need to watch the video from different angles at the same time, it is necessary to process the panoramic image with an ordinary camera to watch the video frame of a specific angle.

### Summary of the Invention

The following is a summary of the subject matter described in detail in this disclosure, and this summary is not intended to limit the protection scope of the claims.

The technology known in the art either cannot meet the requirements of different users to watch a video at different angles at the same time, or requires multiple sets of cameras to be used together, especially the cooperation of multiple cloud decks, and also requires the user to watch the video frame of a specific angle with the help of an ordinary camera, which is not only inconvenient in operation, poor in use flexibility, but also high in cost.

The present disclosure provides a method and a device for outputting and examining a video frame.

Embodiments of the present disclosure provide a method for outputting a video frame, including:
acquiring video images from multiple view angles;
fusing and stitching, according to view angle information provided by a user terminal, video images of corresponding view angles to form a local video frame matching the view angle information;
providing the local video frame to the user terminal.

In an exemplary embodiment, before providing the local video frame to the user terminal, the method further includes: fusing and stitching video images of all view angles to form a panoramic video frame; when providing the local video frame to the user terminal, the method further includes: providing the panoramic video frame to the user terminal.

In an exemplary embodiment, the panoramic video frame is provided to the user terminal in one of the following ways: providing the panoramic video frame and the local video frame to the user terminal simultaneously; or providing the panoramic video frame and the local video frame respectively to the user terminal through two paths of code streams.

In an exemplary embodiment, when providing the local video frame to the user terminal, the method further includes one or two of the following: providing to the user terminal a shooting parameter for each view angle in multiple view angles and a stitching fusion algorithm parameter so that the user terminal can zoom, or flatten, or zoom and flatten the local video frame or panoramic video frame; providing to an intermediate node the shooting parameter for each view angle in multiple view angles and the stitching fusion algorithm parameter so that the intermediate node can zoom, or flatten, or zoom and flatten the local video frame or panoramic video frame, and then forward it to the user terminal.

In an exemplary embodiment, before forming a local video frame matching the view angle information, the method further includes: receiving, by the intermediate node, view angle information from the user terminal; or providing, by the intermediate node, the local video frame or the local video frame and the panoramic video frame to the user terminal; or receiving, by the intermediate node, the view angle information from the user terminal; and providing, by the intermediate node, the local video frame or the local video frame and the panoramic video frame to the user terminal.

Embodiments of the present disclosure further provide a device for outputting a video frame, including:
an acquisition module, configured to acquire video images from multiple view angles;
a fusing and stitching module, configured to fuse and stitch, according to view angle information provided by a user terminal, video images of corresponding view angles to form a local video frame matching the view angle information;
a first providing module, configured to provide the local video frame to the user terminal.

In an exemplary embodiment, the fusing and stitching module is further configured to: fuse and stitch video images of all view angles to form a panoramic video frame; the first providing module is configured to: further provide the panoramic video frame to the user terminal when providing the local video frame to the user terminal.

In an exemplary embodiment, the first providing module is further configured to: perform, when providing the local video frame to the user terminal, one or two of the following: providing to the user terminal a shooting parameter for each view angle in multiple view angles and the stitching fusion algorithm parameter so that the user terminal can zoom, or flatten, or zoom and flatten the local video frame or panoramic video frame; providing to an intermediate node the shooting parameter for each view angle in multiple view angles and the stitching fusion algorithm parameter so that the intermediate node can zoom, or flatten, or zoom and flatten the local video frame or panoramic video frame, and then forward it to the user terminal.

Embodiments of the present disclosure further provide a photographing device, including:
an image acquisition device configured to acquire a shot image;
a memory storing a video frame output program;
a processor configured to execute the video frame output program to perform following operations: controlling the image acquisition device to acquire video images from multiple view angles; fusing and stitching, according to view angle information provided by a user terminal, video images of corresponding view angles to form a local video frame matching the view angle information; providing the local video frame to the user terminal.

In an exemplary embodiment, the processor is further configured to perform, when executing the video frame output program, the following operations: before providing the local video frame to the user terminal, fusing and stitching video images of all view angles to form a panoramic video frame; when providing the local video frame to the user terminal, providing the panoramic video frame to the user terminal.

Embodiments of the present disclosure further provide a method for examining a video frame, including:
providing view angle information to a photographing device;
receiving a local video frame matching the view angle information from the photographing device;
displaying the local video frame.

In an exemplary embodiment, after providing the view angle information to the photographing device, the method further includes: receiving a panoramic video frame from the photographing device; when displaying the local video frame, the method further includes: displaying the panoramic video frame.

In an exemplary embodiment, before displaying the local video frame, the method further includes: according to a shooting parameter for each view angle in multiple view angles provided by the photographing device and a stitching fusion algorithm parameter, zooming, or flattening, or zooming and flattening the local video frame, or zooming, or flattening, or zooming and flattening the local video frame and the panoramic video frame.

In an exemplary embodiment, before receiving a local video frame matching the view angle information from the photographing device, or before providing view angle information to a photographing device, the method further includes: providing the view angle information to the intermediate node so that the intermediate node can zoom, or flatten, or zoom and flatten the local video frame or the local video frame and the panoramic video frame from the photographing device, and then forward it.

In an exemplary embodiment, said receiving a local video frame matching the view angle information from the photographing device, includes: receiving the local video frame matching the view angle information from the photographing device and forwarded by the intermediate node; or receiving the local video frame and the panoramic video frame matching the view angle information from the photographing device and forwarded by the intermediate node.

In an exemplary embodiment, the panoramic video frame and the local video frame are displayed as follows: displaying the panoramic video frame and the local video frame in a picture-in-picture form.

In an exemplary embodiment, when displaying the local video frame, the method further includes: adjusting a display mode according to a user operation on a current display interface; where the display mode includes one of the following: displaying the panoramic video frame by a larger frame and displaying the local video frame by a smaller frame; displaying the local video frame by a larger frame and displaying the panoramic video frame by a smaller frame; displaying the local video frame only.

In an exemplary embodiment, when displaying the local video frame, the method further includes: re-providing new view angle information to the photographing device according to a user operation on a current display interface.

Embodiments of the present disclosure further provide a device for examining a video frame, including:
a second providing module, configured to provide view angle information to a photographing device;
a receiving module, configured to receive a local video frame matching the view angle information from the photographing device;
a display module, configured to display the local video frame.

In an exemplary embodiment, the receiving module is further configured to receive a panoramic video frame from the photographing device; the display module is further configured to display the panoramic video frame when displaying the local video frame.

In an exemplary embodiment, the device further includes: a video operation module configured to, according to a shooting parameter for each view angle in multiple view angles provided by the photographing device and a stitching fusion algorithm parameter, zoom, or flatten, or zoom and flatten the local video frame, or to zoom, or flatten, or zoom and flatten the local video frame and the panoramic video frame; the receiving module further configured to: receive a shooting parameter for each view angle in multiple view angles provided by the photographing device and a stitching fusion algorithm parameter.

In an exemplary embodiment, the display module is configured to: display the panoramic video frame and the local video frame in a picture-in-picture form.

Embodiments of the present disclosure further provide a user terminal, including:
a communication module, configured to communicate with a photographing device;
a display screen;
a memory storing a video frame examining program;
a processor configured to execute the video frame examining program to perform following operations: controlling the communication module to provide view angle information to the photographing device, and receiving a local video frame matching the view angle information from the photographing device; controlling the display screen to display the local video frame.

In an exemplary embodiment, the processor is further configured to perform, when executing the video frame examining program, the following operations: after providing the view angle information to the photographing device, receiving a panoramic video frame from the photographing device; when displaying the local video frame, further displaying the panoramic video frame.

In an exemplary embodiment, the processor is further configured to perform, when executing the video frame examining program, the following operations: when displaying the local video frame, further adjusting a display mode according to a user operation on a current display interface; where the display mode includes one of the following:
displaying the panoramic video frame by a larger frame and displaying the local video frame by a smaller frame;
displaying the local video frame by a larger frame and displaying the panoramic video frame by a smaller frame;
displaying the local video frame only.

Embodiments of the present disclosure further provide a computer readable storage medium, having stored thereon a video frame output program that, when being executed by a processor, implements the steps of the aforesaid method for outputting a video frame.

Embodiments of the present disclosure further provide a computer readable storage medium, having stored thereon a video frame examining program that, when being executed by a processor, implements the steps of the aforesaid method for examining a video frame.

Embodiments of the present disclosure further provide a computer readable storage medium storing a computer executable instruction that, when being executed, implements the aforesaid method for outputting a video frame.

In the embodiments of the present disclosure, a video frame of a corresponding angle can be provided to a user according to the angle requirement submitted by the user; there is no need for the cloud deck to cooperate in adjusting the shooting angle, and there is also no need for the user to use other devices, different users can watch a video in different angles at the same time. The operation is simple and convenient; the use is convenient and flexible; and the cost is low.

After reading and understanding the accompanying drawings and detailed descriptions, other aspects can be understood.

### Brief Description of the Drawings

Fig. 1 is a schematic diagram of the influence of a cloud deck angle on a frame view angle in the prior art;
Fig. 2 is a schematic diagram of a system architecture when multiple users watch the same video frame in the prior art;
Fig. 3 is a schematic flow diagram of a method for outputting a video frame according to the first embodiment;
Fig. 4 is a structural schematic diagram of a device for outputting a video frame according to the second embodiment;
Fig. 5 is a structural schematic diagram of a photographing device according to the third embodiment;
Fig. 6 is a schematic flow diagram of a method for examining a video frame according to the fourth embodiment;
Fig. 7 is a structural schematic diagram of a device for examining a video frame according to the fifth embodiment;
Fig. 8 is a structural schematic diagram of a user terminal according to the sixth embodiment;
Fig. 9 is a schematic diagram showing the arrangement of multiple lenses of a panoramic camera by taking a six-eye panoramic camera as an example in Example 1;
Fig. 10 is a schematic diagram of a panoramic video frame obtained by the panoramic camera in Example 1;
Fig. 11a is a schematic diagram of a video frame seen by user A;
Fig. 11b is a schematic diagram of a video frame seen by user B;
Fig. 11c is a schematic diagram of a video frame seen by user C;
Fig. 12a is a schematic diagram of an adjusted video frame seen by user B;
Fig. 12b is a schematic diagram of an adjusted video frame seen by user C;
Fig. 13 is a schematic diagram of a connection between a panoramic camera and multiple user terminals after accessing an intermediate node in Example 2.

### Detailed Description of Preferred Embodiments

The embodiments of the present disclosure will be described below with reference to the accompanying drawings.

The steps shown in the flowcharts of the accompanying drawings may be performed in a computer system, such as a set of computer-executable instructions. Moreover, although logical sequences are shown in the flowcharts, in some cases, the shown or described steps may be performed in a different sequence than those shown here.

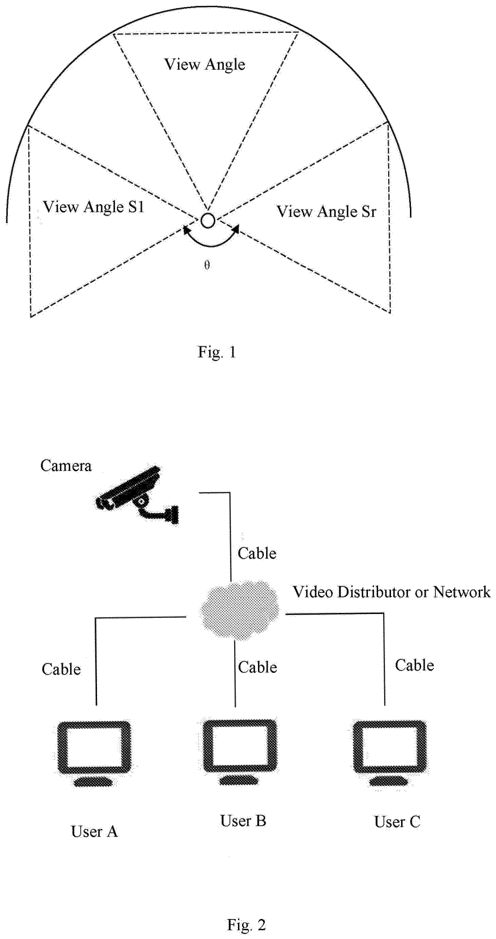

Fig. 1 is a schematic diagram of the influence of a cloud deck angle on a frame view angle in the prior art. Taking the camera cloud deck mechanical limit of 180 degrees and the view angle of 60 degrees as an example, the frame corresponding to the left limit is S1; the frame corresponding to the right limit is Sr; the frame corresponding to the normal direction is Sm; at a certain moment, the camera can only output the frames within the range of the left limit and the right limit; and the camera cannot acquire the video images in an area that the mechanical limit cannot reach, i.e. within the range of view angle θ.

Fig. 2 is a schematic diagram of a system architecture when multiple users watch the same video frame in the prior art. The camera in Fig. 2 is connected to the video distributor or network through a cable. Users A, B and C may select the frames within the range of the left limit and the right limit in Fig. 1 at different moments. Due to the characteristics of the camera in Fig. 1, if the user A selects the video frame S1 of the left limit, then the users B and C can only see the video frame S1, even if the user B really wants to pay attention to the video frame Sm or the user C really concerns about the video frame Sr. In this way, if the requirement that multiple users examine video images of different angles needs to be met at the same place, it is necessary to set up a camera array facing different directions. If the requirement that three users examine video images of different angles needs to be met, at least three cameras with the aforesaid view angle of 60 degrees need to be set up, that is to say, increasing the camera equipment and the cable bandwidth can meet the above requirements.

As can be seen from the above, the prior art either fails to meet the requirements that different users watch a video at different angles at the same time, or needs to set up a camera array facing different directions, and in particular, a plurality of cloud decks for adjusting directions need to be used. After that, the user still needs to examine the video frame at a specific angle with the help of a camera, which is not only inconvenient to operate, but also has poor flexibility and high cost.

The present disclosure provides the following technical solution. The photographing device can form a corresponding local video frame according to the view angle information provided by the user terminal, and provide it to the user terminal. Each user terminal can obtain a corresponding local video frame by submitting its own view angle information to the photographing device. In this way, different users can watch the video at different angles at the same time, and there is no need to adjust the shooting angle in real time in order to meet the user's needs, and then it is unnecessary to adjust the shooting orientation through the cloud deck, which not only provides flexibility in use, but also reduces the equipment cost. In addition, the user terminal can directly display the video frame provided by the photographing device to the user, without the help of other devices. The operation is simple and convenient, and the cost brought by other devices is also saved.

### First Embodiment

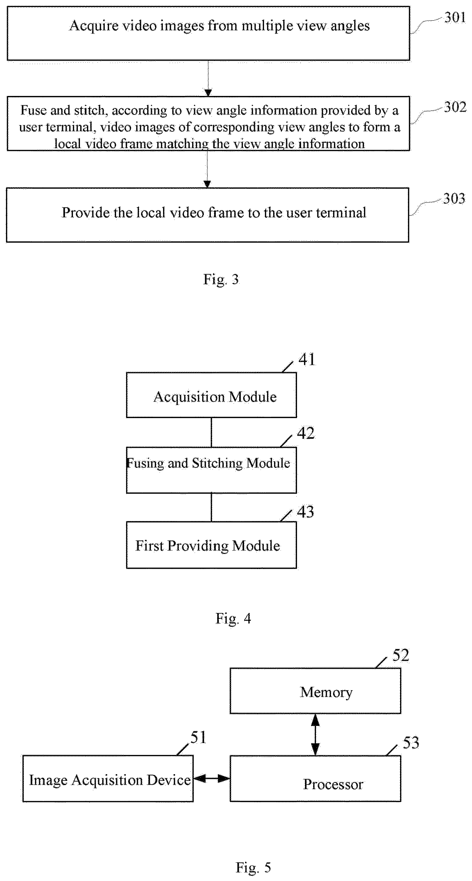

A method for outputting a video frame is provided, which may be implemented by a photographing device, and as shown in Fig. 3, the method may include:
in step 301, acquiring video images from multiple view angles;
in step 302, fusing and stitching, according to view angle information provided by a user terminal, video images of corresponding view angles to form a local video frame matching the view angle information;
in step 303, providing the local video frame to the user terminal.

In this embodiment, the photographing device may form a corresponding local video frame according to the view angle information provided by a user terminal, and provide it to the user terminal. In this way, different users can watch the video at different angles at the same time, and there is no need to adjust the shooting orientation through the cloud deck, which not only provides flexibility in use, but also reduces the equipment cost.

In this embodiment, when acquiring video images from multiple view angles, it may be implemented by multiple cameras or devices including multiple camera lenses, and each camera or camera lens acquires a video image of a specified view angle.

In an optional implementation mode, after receiving an examining request from the user terminal, the photographing device may fuse and stitch the video images of the corresponding view angles according to the view angle information carried in the examining request to form a local video frame matching the view angle information and provide it to the user terminal. Here, the view angle information is obtained by the user terminal based on the view angle selected by the user. For example, after receiving the examining request including the view angle information sent by the user terminal of a remote user, adjusting the fusing and stitching mode of the video image and expanding the area of the video image in the panoramic video frame based on the camera with a view angle designated by the remote user. For the cameras that are not selected for watching, they do not appear in the final frame, so as to form the local video frame of a corresponding view angle.

In another optional implementation mode, after receiving a view angle adjusting request from the user terminal, the photographing device may fuse and stitch the video images of the corresponding view angles according to the view angle information carried in the view angle adjusting request to form a local video frame matching the view angle information and provide it to the user terminal. For example, when the view angle needs to be switched, the user may send a view angle adjusting request to the photographing device through the user terminal, and the view angle adjusting request includes new view angle information that is obtained by the user terminal based on the view angles re-selected by the user.

In an optional implementation mode, before the local video frame is provided to the user terminal, the video images of all view angles may be fused and stitched to form a panoramic video frame; when the local video frame is provided to the user terminal, the panoramic video frame may be provided to the user terminal. In this way, it is convenient for a user to simultaneously watch the video frame of a specific view angle and the panoramic video frame.

In a practical application, if the remote user does not provide the view angle information, the photographing device may provide a corresponding video frame to the user terminal of the remote user in a default manner. For example, if the user terminal does not submit any request, the photographing device may fuse and stitch the video images of all view angles in a default manner to form a panoramic video frame and provide it to the remote user.

Here, there may be multiple manners of providing a local video frame and a panoramic video frame. For example, the panoramic video frame and the local video frame may be simultaneously provided to the user terminal; or the panoramic video frame and the local video frame may be respectively provided to the user terminal through two paths of code streams.

In order to enable a remote user to watch an undistorted video frame, in this embodiment, when the photographing device provides the local video frame to the user terminal, it may also provide a shooting parameter for each view angle in multiple view angles and a stitching fusion algorithm parameter to the user terminal so that the user terminal can zoom or flatten the video frame (the local video frame, or the local video frame + the panoramic video frame) based on these parameters to make it conform to the normal watching effect, and then display it.

In addition to the above manner, in order to enable the remote user to watch an undistorted video frame, in this embodiment, when the photographing device provides the local video frame to the user terminal, it may also provide a shooting parameter for each view angle in multiple view angles and a stitching fusion algorithm parameter to an intermediate node so that the intermediate node can zoom, or flatten, or zoom and flatten the local video frame or panoramic video frame, and then forward it to the user terminal. The user terminal receives the video frame (the local video frame, or the local video frame + the panoramic video frame) forwarded by the intermediate node, and can display it directly.

In a practical application, the photographing device and the user terminal may interact through the intermediate node. Optionally, the photographing device may receive the view angle information from the user terminal through the intermediate node, and provide the corresponding local video frame, or the local video frame + the panoramic video frame to the user terminal through the intermediate node. Here, the photographing device can distribute the local video frame, or the local video frame + the panoramic video frame corresponding to the user terminal to each of the multiple user terminals through the intermediate node.

Here, the photographing device can also send the panoramic video frame to the intermediate node, and the intermediate node is responsible for receiving a request (such as an examining request, a view angle switching request, etc.) of each of the multiple user terminals, and then forwarding it to the photographing device to complete the stitching and fusing of corresponding video frames, and then forward them to the user terminal. One of the functions of the intermediate node is to flatten the video frame into a video frame conforming to the normal watching effect according to the request of each of the multiple user terminals, and then send it to the user terminal. By adopting the intermediate node, the operation of zooming and flattening the video by the user terminal can be omitted, thereby reducing the requirement on the device performance of the user terminal.

In order to improve the anti-interference capability, in this embodiment, when providing a video frame (a local video frame, or a local video frame + a panoramic video frame), the photographing device may encode the video frame by using a certain encoding algorithm, and then output it in a digital form.

In this embodiment, the photographing device may be a panoramic camera or other similar device.

### Second Embodiment

A device for outputting a video frame, as shown in Fig. 4, may include:
an acquisition module 41, configured to acquire video images from multiple view angles;
a fusing and stitching module 42, configured to fuse and stitch, according to view angle information provided by a user terminal, video images of corresponding view angles to form a local video frame matching the view angle information;
a first providing module 43, configured to provide the local video frame to the user terminal.

In order to facilitate a user to examine a panoramic video frame and a video frame of a specific view angle at the same time, in this embodiment, the fusing and stitching module 42 may be further configured to: fuse and stitch video images of all view angles to form a panoramic video frame; the first providing module 43 may be configured to: further provide the panoramic video frame to the user terminal when providing the local video frame to the user terminal.

In order to enable a remote user to watch an undistorted video frame, in this embodiment, the first providing module 43 may also be configured to: perform, when providing the local video frame to the user terminal, one or two of the following: 1) providing to the user terminal a shooting parameter for each view angle in multiple view angles and the stitching fusion algorithm parameter so that the user terminal can zoom, or flatten, or zoom and flatten the local video frame or panoramic video frame; 2) providing to an intermediate node the shooting parameter for each view angle in multiple view angles and the stitching fusion algorithm parameter so that the intermediate node can zoom, or flatten, or zoom and flatten the local video frame or panoramic video frame, and then forward it to the user terminal.

The device for outputting a video frame in this embodiment can implement all details of the method described in the first embodiment. In this embodiment, the acquisition module 41, the fusing and stitching module 42 and the first providing module 43 respectively may be software, hardware, or a combination of the two. The aforesaid device for outputting a video frame may be implemented by a photographing device, or arranged in the photographing device. For example, the device for outputting a video frame may be implemented by a panoramic camera, and at the moment, the acquisition module 41 may be a camera array composed of multiple cameras in the panoramic camera; the fusing and stitching module 42 may be a part (such as a processor) responsible for image processing in the panoramic camera; and the first providing module 43 may be a part responsible for communication in the panoramic camera. In a practical application, the aforesaid device for outputting a video frame and each part thereof may also be implemented in other forms, which are not limited here.

### Third Embodiment

A photographing device, as shown in Fig. 5, may include:
an image acquisition device 51 configured to acquire a shot image;
a memory 52 storing a video frame output program;
a processor 53 configured to execute the video frame output program to perform following operations: controlling the image acquisition device to acquire video images from multiple view angles; fusing and stitching, according to view angle information provided by a user terminal, video images of corresponding view angles to form a local video frame matching the view angle information; providing the local video frame to the user terminal.

The photographing device in this embodiment can implement all details of the method described in the first embodiment. In this embodiment, the photographing device may be a panoramic camera or other similar device.

In a practical application, the image acquisition device in this embodiment may be a lens array formed by multiple lenses; each lens takes a video image in a view angle or within a certain view angle range, and the entire lens array can take a video image of 306 degrees. Alternatively, the image acquisition device may be a camera array formed by multiple cameras; each camera takes a video image in a view angle or within a certain view angle range, and the entire camera array can take a video image of 306 degrees.

### Fourth Embodiment

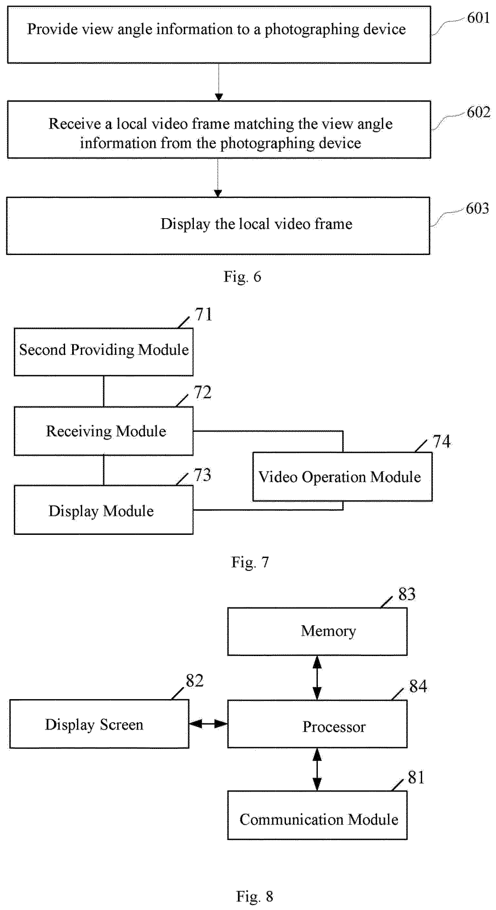

A method for examining a video frame is provided, which may be implemented by a user terminal, and as shown in Fig. 6, the method may include:
in step 601, providing view angle information to a photographing device;
in step 602, receiving a local video frame matching the view angle information from the photographing device;
in step 603, displaying the local video frame.

In this embodiment, each of the multiple user terminals can obtain a corresponding local video frame by submitting its own view angle information to the photographing device. In this way, different users can watch the video at different angles at the same time, and the user terminal can directly display the video frame provided by the photographing device to the user, without the help of other devices. The operation is simple and convenient, and the cost brought by other devices is also saved.

In an optional implementation mode, a user terminal may send an examining request to the photographing device, where the examining request carries view angle information, and the photographing device fuses and stitches the video images of corresponding view angles to form a local video frame matching the view angle information and provide it to the user terminal. Here, the view angle information may be obtained by the user terminal based on a view angle selected by the user.

In another optional implementation mode, a user terminal may send a view angle adjusting request to the photographing device, where the view angle adjusting request carries new view angle information, and the photographing device fuses and stitches the video images of the corresponding view angles according to the new view angle information to form a local video frame matching the new view angle information and provide it to the user terminal. Here, when the view angle needs to be switched, the user may send the view angle adjusting request to the photographing device through the user terminal, and the view angle adjusting request includes new view angle information that may be obtained by the user terminal based on the view angles re-selected by the user. For example, when displaying the local video frame, new view angle information may be re-provided to the photographing device according to a user operation on a current display interface.

In order to enable a remote user to watch an undistorted frame, in this embodiment, before the local video frame is displayed, according to a shooting parameter for each view angle in multiple view angles provided by the photographing device and a stitching fusion algorithm parameter, the user terminal may also zoom, or flatten, or zoom and flatten the local video frame, or zoom, or flatten, or zoom and flatten the local video frame and the panoramic video frame, to make it conform to the normal watching effect, and then display it.

In order to enable a remote user to watch an undistorted frame, in this embodiment, the user terminal may also provide the view angle information to the intermediate node before receiving a local video frame matching the view angle information from the photographing device, or before providing view angle information to the photographing device, so that the intermediate node can zoom, or flatten, or zoom and flatten the local video frame or the local video frame and the panoramic video frame from the photographing device, and then forward it to the user terminal. At the moment, the user terminal receives the video frame (the local video frame, or the local video frame + the panoramic video frame) forwarded by the intermediate node, and can display it directly. In this way, by adopting the intermediate node, the operation of zooming and flattening the video by the user terminal can be omitted, thereby reducing the requirement on the device performance of the user terminal.

Correspondingly, said receiving a local video frame matching the view angle information from the photographing device may include: receiving the local video frame matching the view angle information from the photographing device and forwarded by the intermediate node; or receiving the local video frame and the panoramic video frame matching the view angle information from the photographing device and forwarded by the intermediate node.

In this embodiment, after the view angle information is provided to the photographing device, the panoramic video frame from the photographing device may also be received; when the local video frame is displayed, the panoramic video frame may also be displayed. In this way, it is convenient for the user to simultaneously watch the video frame of a specific view angle and the panoramic video frame.

In this embodiment, the user terminal may use multiple display modes to display a video frame provided by the photographing device. For example, the panoramic video frame and the local video frame can be displayed in a picture-in-picture form.

In this embodiment, when the local video frame is displayed, the display mode may be adjusted according to a user operation on a current display interface, where the display mode includes one of the following: 1) displaying the panoramic video frame by a larger frame and displaying the local video frame by a smaller frame; 2) displaying the local video frame by a larger frame and displaying the panoramic video frame by a smaller frame; 3) displaying the local video frame only.

Here, when the local video frame is displayed, a user command may be provided to the photographing device according to a user operation on the current display interface, so that the photographing device stops providing the panoramic video frame after receiving the user command. In this way, the user terminal can display the local video frame only.

In this embodiment, the user terminal may be implemented in various forms. For example, the terminal described in this embodiment may include a mobile terminal such as a mobile phone, a tablet computer, a notebook computer, a palmtop computer, a Personal Digital Assistant (PDA), a Portable Media Player (PMP), a navigation device, a wearable device, a smart bracelet, a pedometer, and the like, as well as a fixed terminal such as a digital Television (TV), a desktop computer, and the like.

### Fifth Embodiment

A device for examining a video frame, as shown in Fig. 7, may include:
a second providing module 71, configured to provide view angle information to a photographing device;
a receiving module 72, configured to receive a local video frame matching the view angle information from the photographing device;
a display module 73, configured to display the local video frame.

In this embodiment, the receiving module 72 may also be configured to receive a panoramic video frame from the photographing device; the display module 73 may also be configured to display the panoramic video frame when displaying the local video frame.

In this embodiment, the aforesaid device for examining a video frame may further include: a video operation module 74 configured to, according to a shooting parameter for each view angle in multiple view angles provided by the photographing device and a stitching fusion algorithm parameter, zoom, or flatten, or zoom and flatten the local video frame, or to zoom, or flatten, or zoom and flatten the local video frame and the panoramic video frame; the receiving module 72 further configured to: receive a shooting parameter for each view angle in multiple view angles provided by the photographing device and a stitching fusion algorithm parameter.

In this embodiment, the display module 73 may display the local video frame in a variety of ways. For example, the display module 73 may be configured to display the panoramic video frame and the local video frame in a picture-in-picture form.

The device for examining a video frame in this embodiment can implement all details of the method described in the fourth embodiment. In this embodiment, the second providing module 71, the receiving module 72, the display module 73 and the video operation module 74 respectively may be software, hardware, or a combination of the two. The aforesaid device for outputting a video frame may be implemented by a user terminal, or arranged in the user terminal.

In this embodiment, the user terminal may be implemented in various forms. For example, the terminal described in this embodiment may include a mobile terminal such as a mobile phone, a tablet computer, a notebook computer, a palmtop computer, a Personal Digital Assistant (PDA), a Portable Media Player (PMP), a navigation device, a wearable device, a smart bracelet, a pedometer, and the like, as well as a fixed terminal such as a digital TV, a desktop computer, a conference television terminal, and the like.

For example, the aforesaid device for outputting a video frame may be implemented by a mobile phone, and at the moment, the second providing module 71 and the receiving module 72 may be implemented by the processor + communication component (such as a WIFI (Wireless Fidelity) communication module, a RF (Radio Frequency) unit, a wired cable, and the like) of the mobile phone; the display module 73 and the video operation module 74 may be implemented by the processor + display screen of the mobile phone. In a practical application, the aforesaid device for examining a video frame and each part thereof may also be implemented in other forms, which are not limited here.

### Sixth Embodiment

A user terminal, as shown in Fig. 8, may include:
a communication module 81, configured to communicate with a photographing device;
a display screen 82;
a memory 83 storing a video frame examining program;
a processor 84 configured to execute the video frame examining program to perform following operations: controlling the communication module to provide view angle information to the photographing device, and receiving a local video frame matching the view angle information from the photographing device; controlling the display screen to display the local video frame.

The user terminal in this embodiment can implement all details of the method described in the fourth embodiment. In this embodiment, the user terminal may be implemented in various forms. For example, the terminal described in this embodiment may include a mobile terminal such as a mobile phone, a tablet computer, a notebook computer, a palmtop computer, a Personal Digital Assistant (PDA), a Portable Media Player (PMP), a navigation device, a wearable device, a smart bracelet, a pedometer, and the like, as well as a fixed terminal such as a digital TV, a desktop computer, and the like.

It is worth noting that the local video image frame in the present disclosure may refer to a video frame including a video image within a certain view angle range, and the panoramic video image frame may refer to a video frame including a video image within a panoramic view angle range, for example, the panoramic video image frame may include the video images in a range of 360 degrees. The view angle information in the present disclosure may represent specified angle information (such as 45 degrees), and may also represent specified angle interval information (such as a front view angle, a front left view angle, a rear left view angle, a rear view angle, a rear right view angle, a front right view angle in Example 1 below). When the view angle information represents the specified angle information, the photographing device may fuse and stitch the video images in the angle interval corresponding to the angle information to form a local video frame corresponding to the angle information; when the view angle information represents the specified angle interval information (such as the front view angle Sf), the photographing device may fuse and stitch the video images in the angle interval to form a local video frame corresponding to the angle interval. In a practical application, the view angle information may be different due to an arrangement of the photographing device in acquiring video images.

The optional implementation modes of the above embodiments in the present disclosure are exemplified below.

### Example 1

In this example, the panoramic camera is an example of the photographing device described above, and the panoramic camera may include multiple lenses, each of which can take a video image of a specified view angle.

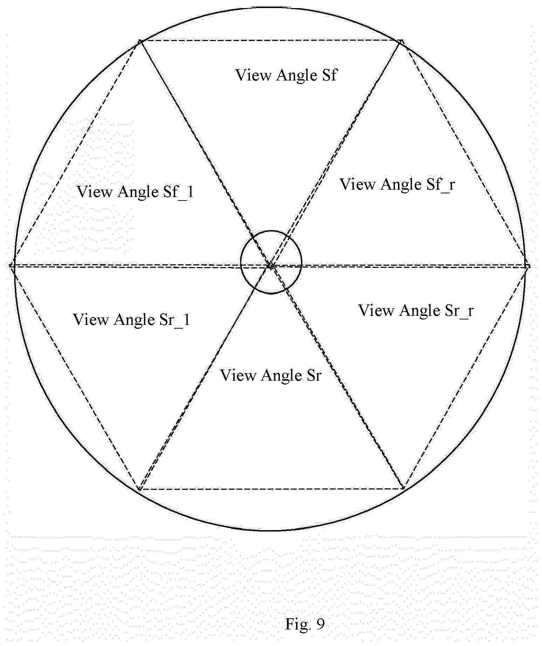

Fig. 9 is a schematic diagram showing the arrangement of multiple lenses of the panoramic camera.

As shown in Fig. 9, the panoramic camera includes six lenses with a view angle of 60 degrees, which are sequentially arranged on the circumference at an included angle of 60 degrees. The view angles corresponding to the video images acquired by multiple lenses are the front view angle Sf, the front left view angle Sf_1 the rear left view angle Sr_1 the rear view angle Sr, the rear right view angle Sr_r, and the front right view angle Sf_r in sequence. According to the view angle information provided by the user terminal, the panoramic camera may use the predetermined stitching fusion algorithm to stitch and fuse the video images obtained by these lenses to form the corresponding local video frames and output them to the user terminal.

In this example, the panoramic camera may acquire the video images by 360 degrees, and thus the panoramic camera can meet the requirement that multiple users (such as users A, B and C) simultaneously examine video images of different angles.

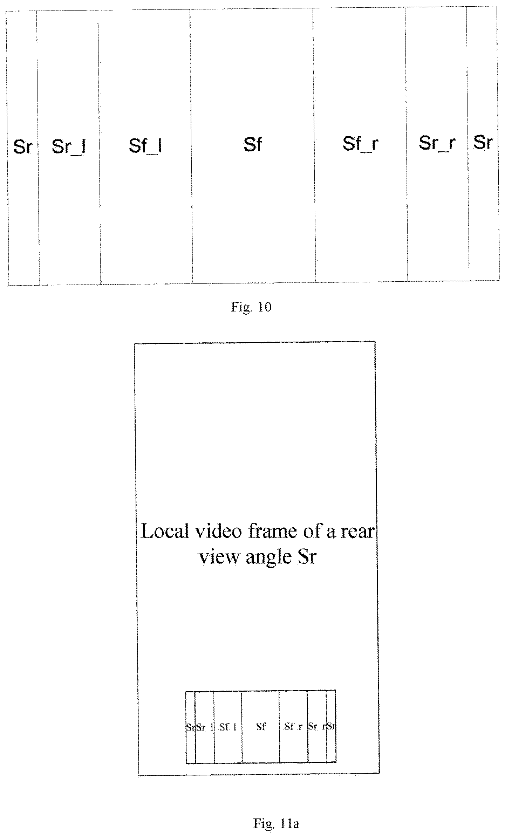

Fig. 10 is a schematic diagram of a panoramic video frame obtained by the panoramic camera, taking a 6-eye panoramic camera as an example. As shown in Fig. 10, the output of the panoramic camera includes the image contents acquired by all lenses, but they can only exist in the same frame as deformed area blocks. For example, the videos of six lenses are arranged in a sequence of the rear view angle Sr, the rear left view angle Sr_1, the front left view angle Sf_1, the front view angle Sf, the front right view angle Sf_r, the rear right view angle Sr_r, and the rear view angle Sr, and the video images previously acquired by the six lenses can be zoomed with long and short edges, and then the zoomed video images are stitched by boundary fusion. If it is a spherical panoramic camera, then it is not just the zooming processing of the long and short edges.

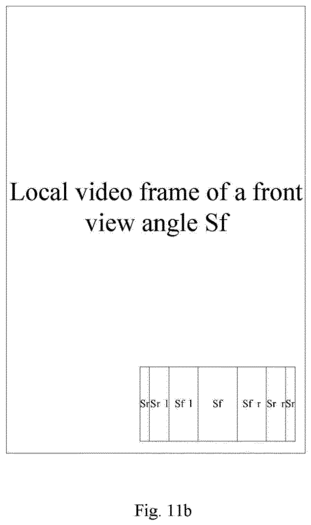

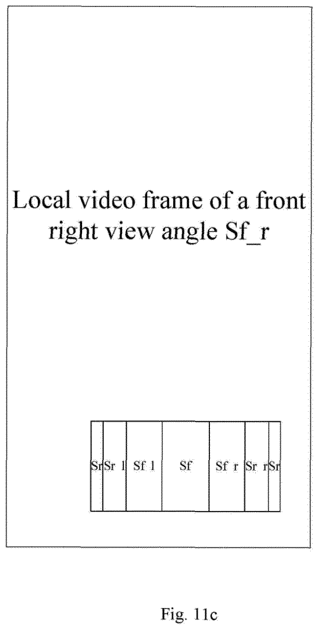

Fig. 11 is a schematic diagram of the display after the panoramic camera synthesizes the video frames, taking a 6-eye panoramic camera for shooting, and 3 users watching from different angles as an example.

After the panoramic camera receives the examining request sent by the user terminal, the fusing and stitching mode of the panoramic camera is adjusted to expand the area of the video image shot by the lens in the video frame based on the lens corresponding to the view angle information carried in the examining request, and for the video images shot by the lenses that are not selected for watching, they do not appear in the final frame, so as to form the local video frame matching the view angel information.

The user terminals of the remote users A, B and C respectively send out the requests for respectively examining the images of the rear view angle Sr, the front view angle Sf, and the front right view angle Sf_r, and after receiving these requests, the panoramic camera respectively outputs the local video frame including the video image of the rear view angle Sr, the local video frame including the video image of the front view angle Sf, the local video frame including the video image of the front right view angle Sf_r to the user terminals of the remote users A, B and C. In addition, the panoramic camera may also respectively outputs the panoramic video frame to the user terminals of the remote users A, B and C.

For example, the panoramic camera may zoom out the panoramic video frame into a smaller frame, and zoom in the local video frame into a larger frame, and then output them to the user terminal in a picture-in-picture form, and the user terminal displays them in the form of taking the panoramic video frame as the smaller frame and taking the local video frame as the larger frame. In the display process, the smaller frame may be closed. For example, a smaller frame may be automatically closed at a fixed time, or may be manually closed by a user, and the user terminal closes the smaller frame on the display interface after receiving a user command for closing the smaller frame. As shown in Fig. 11a, it is a schematic diagram of a video frame seen by user A; as shown in Fig. 11b, it is a schematic diagram of a video frame seen by user B; and as shown in Fig. 11c, it is a schematic diagram of a video frame seen by user C.

For another example, the panoramic camera may provide the panoramic video frame and the local video frame to the user terminal as two paths of code streams, and the user terminal determines, according to the selection of the user, whether to display the smaller frame (namely the panoramic video frame), and how to display the panoramic video frame and the local video frame.

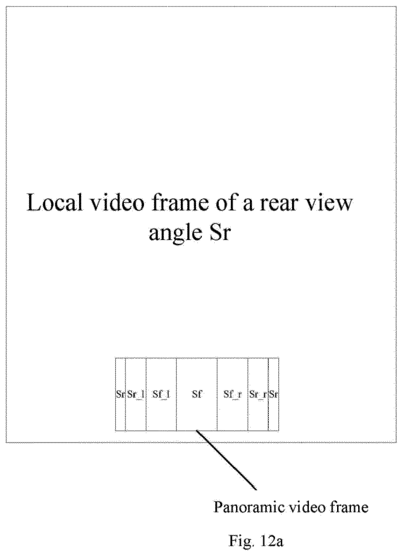

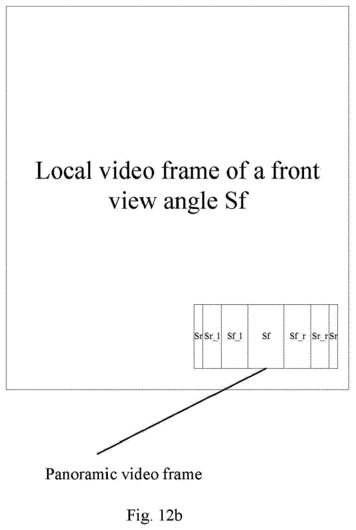

For yet another example, if a user wants to adjust the angle for watching, the user may manually start the picture-in-picture display mode in the display interface, and then select a new view angle in the panoramic video frame. The user terminal re-obtains new view angle information according to the user command, and provides a view angle adjusting request to the panoramic camera, where the view angle adjusting request carries the new view angle information, and the panoramic camera fuses and stitches the video images of corresponding view angles based on the new view angle information to form a local video frame matching the new view angle information and provide it to the user terminal, and then the user terminal displays the local video frame matching the new view angle information to the user. The remote user B sends a request for switching to the rear view angle Sr, and as shown in Fig. 12a, it is a schematic diagram of an adjusted video frame seen by user B; the remote user C sends a request for switching to the front view angle Sf, and as shown in Fig. 12b, it is a schematic diagram of an adjusted video frame seen by user C.

### Example 2

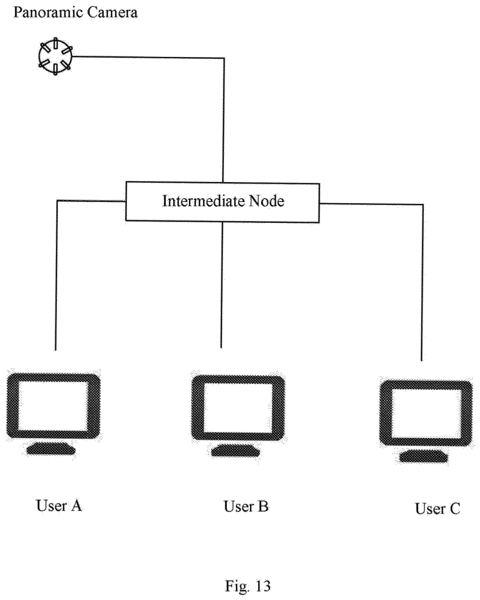

In this example, an intermediate node may be set between the panoramic camera and the user terminal. Fig. 13 is a schematic diagram of a connection between a panoramic camera and multiple user terminals after accessing an intermediate node. As shown in Fig. 13, the user terminals of the users A, B and C are respectively connected to the intermediate node, and then the intermediate node is connected to the panoramic camera.

In this example, the intermediate node is responsible for receiving the view angle adjusting request from each user terminal of the multiple user terminals, and then forwarding it to the panoramic camera to complete the stitching and fusing of the corresponding local video frames. The general function of the intermediate node is to flatten the local video frame provided by the panoramic camera into the video frame conforming to the normal watching effect according to the request of each user terminal of the multiple user terminals, and then distribute it to the user terminal, and at the moment, the corresponding remote user sees the local video frame corresponding to the view angle selected by the remote user. Through the intermediate node, the operation of zooming and flattening the video frame by the remote user can be omitted, and the requirements on the device are reduced a lot.

In addition, embodiments of the present disclosure further provide a computer readable storage medium, having stored thereon a video frame output program that, when being executed by a processor, implements the steps of the method for outputting a video frame. Alternatively, the computer readable storage medium can implement all details of the method described in the first embodiment.

In addition, embodiments of the present disclosure further provide another computer readable storage medium, having stored thereon a video frame examining program that, when being executed by a processor, implements the steps of the aforesaid method for examining a video frame. Alternatively, the computer readable storage medium can implement all details of the method described in the fourth embodiment.

Optionally, in this embodiment, the aforesaid storage medium may include, but is not limited to, a USB flash disk, an ROM (Read-Only Memory), an RAM (Random Access Memory), a mobile hard disk, a magnetic disk, an optical disk and other various media capable of storing program codes.

Optionally, in this embodiment, the processor performs the method steps of the aforesaid embodiments according to the program code stored in the storage medium.

Optionally, the alternative example in this embodiment may refer to the examples described in the above embodiments and the alternative implementation modes, and the details are not described herein again.

Embodiments of the present disclosure further provide a computer readable storage medium storing a computer executable instruction that, when being executed, implements the aforesaid method for outputting a video frame.

Those of ordinary skill in the art may understand that all or part of the steps of the aforesaid method may be performed by a program to instruct related hardware (such as a processor), and the program may be stored in a computer readable storage medium, such as a read-only memory, a magnetic disk or an optical disk. Alternatively, all or part of the steps of the aforesaid embodiments may also be implemented using one or more integrated circuits. Correspondingly, the modules/units in the above embodiments may be implemented in the form of hardware, for example, the corresponding functions thereof being implemented through an integrated circuit, and may also be implemented in the form of a software function module, for example, the corresponding functions thereof being implemented by a processor to perform the program/instruction stored in the memory. The present disclosure is not limited to any combination of hardware and software in any particular form.

Those of ordinary skill in the art may understand that the functional modules/units in all or some of the steps, systems, and devices in the method disclosed above can be implemented as software, firmware, hardware and an appropriate combination thereof. In the hardware implementation, the division between functional modules/units mentioned in the above description does not necessarily correspond to the division of physical components; for example, one physical component may have multiple functions, or one function or step may be executed by several physical components in cooperation. Some or all of the components may be implemented as software executed by a processor, such as a digital signal processor or a microprocessor, or may be implemented as hardware, or may be implemented as an integrated circuit, such as a dedicated integrated circuit. Such software may be distributed on computer readable media, and the computer readable media may include computer storage media (or non-transitory media) and communication media (or transitory media). As is well known to those of ordinary skill in the art, the term computer storage medium includes volatile and nonvolatile, removable and non-removable media implemented in any method or technology for storing information (such as computer readable instructions, data structures, program modules, or other data). The computer storage medium includes, but is not limited to, an RAM (Random Access Memory), an ROM (Read-Only Memory), an EEPROM (Electrically Erasable Programmable Read-Only Memory), a flash memory or other memory technology, a CD-ROM (Compact Disc Read-Only Memory), a DVD (Digital Versatile Disc) or other optical disc storage, magnetic cartridge, magnetic tape, magnetic disk storage or other magnetic storage device, or any other medium which can be used to store desired information and can be accessed by a computer. Moreover, it is well known to those of ordinary skill in the art that communication media usually include computer readable instructions, data structures, program modules, or other data in a modulated data signal such as carrier or other transmission mechanisms, and may include any information delivery media.

Those of ordinary skill in the art may understand that modifications or equivalent replacements can be made to the technical solutions of the present disclosure, without departing from the spirit and scope of the technical solutions of the present disclosure, and should be covered within the scope of the claims of the present disclosure.

### Industrial Applicability

In the embodiments of the present disclosure, a video frame of a corresponding angle can be provided to a user according to the angle requirement submitted by the user; there is no need for the cloud deck to cooperate in adjusting the shooting angle, and there is also no need for the user to use other devices, different users can watch a video in different angles at the same time. The operation is simple and convenient; the use is convenient and flexible; and the cost is low.

## Claims

1. A method for outputting a video frame, comprising:
acquiring video images from multiple view angles;
fusing and stitching, according to view angle information provided by a user terminal, video images of corresponding view angles to form a local video frame matching the view angle information;
providing the local video frame to the user terminal.

2. The method for outputting according to claim 1,
before providing the local video frame to the user terminal, further comprising: fusing and stitching video images of all view angles to form a panoramic video frame;
when providing the local video frame to the user terminal, further comprising: providing the panoramic video frame to the user terminal.

3. The method for outputting according to claim 2, wherein the panoramic video frame is provided to the user terminal in one of the following ways:
providing the panoramic video frame and the local video frame to the user terminal simultaneously;
providing the panoramic video frame and the local video frame respectively to the user terminal through two paths of code streams.

4. The method for outputting according to any of claims 1 to 3, when providing the local video frame to the user terminal, further comprising one or two of the following:
providing to the user terminal a shooting parameter for each view angle in multiple view angles and a stitching fusion algorithm parameter so that the user terminal can zoom, or flatten, or zoom and flatten the local video frame or panoramic video frame;
providing to an intermediate node the shooting parameter for each view angle in multiple view angles and the stitching fusion algorithm parameter so that the intermediate node can zoom, or flatten, or zoom and flatten the local video frame or panoramic video frame, and then forward it to the user terminal.

5. The method for outputting according to claim 4,
before forming a local video frame matching the view angle information, further comprising: receiving, by the intermediate node, view angle information from the user terminal; or
providing, by the intermediate node, the local video frame or the local video frame and the panoramic video frame to the user terminal; or
receiving, by the intermediate node, the view angle information from the user terminal; and providing, by the intermediate node, the local video frame or the local video frame and the panoramic video frame to the user terminal.

6. A device for outputting a video frame, comprising:
an acquisition module, configured to acquire video images from multiple view angles;
a fusing and stitching module, configured to fuse and stitch, according to view angle information provided by a user terminal, video images of corresponding view angles to form a local video frame matching the view angle information;
a first providing module, configured to provide the local video frame to the user terminal.

7. The device for outputting according to claim 6, wherein
the fusing and stitching module is further configured to: fuse and stitch video images of all view angles to form a panoramic video frame;
the first providing module is configured to: further provide the panoramic video frame to the user terminal when providing the local video frame to the user terminal.

8. The device for outputting according to claim 6 or 7,
the first providing module further configured to: perform, when providing the local video frame to the user terminal, one or two of the following:
providing to the user terminal a shooting parameter for each view angle in multiple view angles and the stitching fusion algorithm parameter so that the user terminal can zoom, or flatten, or zoom and flatten the local video frame or panoramic video frame;
providing to an intermediate node the shooting parameter for each view angle in multiple view angles and the stitching fusion algorithm parameter so that the intermediate node can zoom, or flatten, or zoom and flatten the local video frame or panoramic video frame, and then forward it to the user terminal.

9. A photographing device, comprising:
an image acquisition device configured to acquire a shot image;
a memory storing a video frame output program;
a processor configured to execute the video frame output program to perform following operations: controlling the image acquisition device to acquire video images from multiple view angles; fusing and stitching, according to view angle information provided by a user terminal, video images of corresponding view angles to form a local video frame matching the view angle information; providing the local video frame to the user terminal.

10. The photographing device according to claim 9, wherein the processor is further configured to perform, when executing the video frame output program, the following operations:
before providing the local video frame to the user terminal, fusing and stitching video images of all view angles to form a panoramic video frame;
when providing the local video frame to the user terminal, providing the panoramic video frame to the user terminal.

11. A method for examining a video frame, comprising:
providing view angle information to a photographing device;
receiving a local video frame matching the view angle information from the photographing device;
displaying the local video frame.

12. The method for examining according to claim 11,
after providing the view angle information to the photographing device, further comprising: receiving a panoramic video frame from the photographing device;
when displaying the local video frame, further comprising: displaying the panoramic video frame.

13. The method for examining according to claim 11 or 12,
before displaying the local video frame, further comprising: according to a shooting parameter for each view angle in multiple view angles provided by the photographing device and a stitching fusion algorithm parameter, zooming, or flattening, or zooming and flattening the local video frame, or zooming, or flattening, or zooming and flattening the local video frame and the panoramic video frame.

14. The method according to claim 11 or 12, before receiving a local video frame matching the view angle information from the photographing device, or before providing view angle information to a photographing device, further comprising:
providing the view angle information to the intermediate node so that the intermediate node can zoom, or flatten, or zoom and flatten the local video frame or the local video frame and the panoramic video frame from the photographing device, and then forward it.

15. The method according to claim 14, wherein said receiving a local video frame matching the view angle information from the photographing device, comprises:
receiving the local video frame matching the view angle information from the photographing device and forwarded by the intermediate node; or
receiving the local video frame and the panoramic video frame matching the view angle information from the photographing device and forwarded by the intermediate node.

16. The method for examining according to claim 12, wherein the panoramic video frame and the local video frame are displayed as follows:
displaying the panoramic video frame and the local video frame in a picture-in-picture form.

17. The method according to claim 11, 12 or 16,
when displaying the local video frame, further comprising: adjusting a display mode according to a user operation on a current display interface;
wherein the display mode comprises one of the following:
displaying the panoramic video frame by a larger frame and displaying the local video frame by a smaller frame;
displaying the local video frame by a larger frame and displaying the panoramic video frame by a smaller frame;
displaying the local video frame only.

18. The method according to claim 11, 12 or 16,
when displaying the local video frame, further comprising: re-providing new view angle information to the photographing device according to a user operation on a current display interface.

19. A device for examining a video frame, comprising:
a second providing module, configured to provide view angle information to a photographing device;
a receiving module, configured to receive a local video frame matching the view angle information from the photographing device;
a display module, configured to display the local video frame.

20. The device for examining according to claim 19, wherein
the receiving module is further configured to receive a panoramic video frame from the photographing device;
the display module is further configured to display the panoramic video frame when displaying the local video frame.

21. The device for examining according to claim 19 or 20,
further comprising: a video operation module configured to, according to a shooting parameter for each view angle in multiple view angles provided by the photographing device and a stitching fusion algorithm parameter, zoom, or flatten, or zoom and flatten the local video frame, or to zoom, or flatten, or zoom and flatten the local video frame and the panoramic video frame;
the receiving module further configured to: receive a shooting parameter for each view angle in multiple view angles provided by the photographing device and a stitching fusion algorithm parameter.

22. The device for examining according to claim 20, wherein
the display module is configured to: display the panoramic video frame and the local video frame in a picture-in-picture form.

23. A user terminal, comprising:
a communication module, configured to communicate with a photographing device;
a display screen;
a memory storing a video frame examining program;
a processor configured to execute the video frame examining program to perform following operations: controlling the communication module to provide view angle information to the photographing device, and receiving a local video frame matching the view angle information from the photographing device; controlling the display screen to display the local video frame.

24. The user terminal according to claim 23, wherein the processor is further configured to perform, when executing the video frame examining program, the following operations:
after providing the view angle information to the photographing device, receiving a panoramic video frame from the photographing device;
when displaying the local video frame, further displaying the panoramic video frame.

25. The user terminal according to claim 23, wherein the processor is further configured to perform, when executing the video frame examining program, the following operations:
when displaying the local video frame, further adjusting a display mode according to a user operation on a current display interface;
wherein the display mode comprises one of the following:
displaying the panoramic video frame by a larger frame and displaying the local video frame by a smaller frame;
displaying the local video frame by a larger frame and displaying the panoramic video frame by a smaller frame;
displaying the local video frame only.

26. A computer readable storage medium, having stored thereon a video frame output program that, when being executed by a processor, implements the steps of the method for outputting a video frame according to any of claims 1 to 5.

27. A computer readable storage medium, having stored thereon a video frame examining program that, when being executed by a processor, implements the steps of the method for examining a video frame according to any of claims 11 to 18.
